# EUROPEAN PATENT APPLICATION

(11) **EP 4 123 521 A1**
(43) Date of publication of application: **25.01.2023**
(21) Application number: 21771792.5
(22) Date of filing: 17.03.2021
(51) Int. Cl.: G06Q 10/00

(54) **RESOURCE RECOVERY SYSTEM, SERVER DEVICE, AND METHOD**

(30) Priority: 18.03.2020 JP 2020048419; 18.03.2020 JP 2020048401
(71) Applicant: Kyocera Corporation, Kyoto-shi Kyoto 612-8501 (JP)
(72) Inventor: TERAI, Ryota, Kyoto-shi, Kyoto 612-8501 (JP); SUGIHARA, Kazunari, Kyoto-shi, Kyoto 612-8501 (JP); HACHIKI, Nobuhiko, Kyoto-shi, Kyoto 612-8501 (JP); UCHISHIBA, Hirofumi, Kyoto-shi, Kyoto 612-8501 (JP); SUZUKI, Yuki, Kyoto-shi, Kyoto 612-8501 (JP); FUJISAWA, Ryuta, Kyoto-shi, Kyoto 612-8501 (JP); TAKAHASHI, Masaya, Kyoto-shi, Kyoto 612-8501 (JP)
(74) Representative: TBK
(86) International application number: PCT/JP2021/010943
(87) International publication number: WO 2021/187544

(57) **Abstract**

A resource recovery system 1 is a system for recovering articles which can be recycled as resources. The resource recovery system 1 includes a resource recovery apparatus 200 that recovers the article discarded by a consumer, and a server apparatus 300 that communicates with the resource recovery apparatus 200. The resource recovery apparatus transmits, to the server apparatus 300, a first message including an article identifier for identifying the recovered article. The server apparatus 300 associates, based on the first message received from the resource recovery apparatus 200, a discarding time when the article is discarded with a provision time when the article is provided to the consumer.

## Description

### TECHNICAL FIELD

The present invention relates to a resource recovery system, a server apparatus, and a method.

### BACKGROUND OF INVENTION

In the related art, a technology in which electronic tags are attached to articles such as products for management of the articles using the electronic tags is known.

Patent Literature 1 describes a method of making data stored in the electronic tag unreadable by detecting the electronic tag provided on an article and invalidating the detected electronic tag, in a resource recovery apparatus (so-called, a garbage box) that recovers wastes, which are articles discarded by consumers.

According to the method described in Patent Literature 1, by invalidating the electronic tag attached to the waste, the privacy of the consumer can be protected.

### CITATION LIST

### PATENT LITERATURE

Patent Literature 1: Japanese Patent Application Publication (Translation of PCT Application) No. 2009-516262

### SUMMARY

A resource recovery system according to a first aspect is a system that recovers articles which can be recycled as resources. The resource recovery system includes a resource recovery apparatus that recovers the article discarded by a consumer, and a server apparatus that communicates with the resource recovery apparatus. The resource recovery apparatus transmits, to the server apparatus, a first message including an article identifier that identifies the recovered article. The server apparatus associates, based on the first message received from the resource recovery apparatus, a discarding time when the article is discarded with a provision time when the article is provided to the consumer.

A server apparatus according to a second aspect is an apparatus that communicates with a resource recovery apparatus that recovers an article discarded by a consumer, in a resource recovery system that recovers the article that is reusable as a resource. The server apparatus includes a communicator that receives, from the resource recovery apparatus, a first message including an article identifier that identifies the discarded article, and a processing unit that associates, based on the first message, a discarding time when the article is discarded with a provision time when the article is provided to the consumer.

A method according to a third aspect is a method executed by a resource recovery system that recovers articles which can be recycled as resources. The method includes communicating with a resource recovery apparatus that recovers the article discarded by a consumer, receiving, from the resource recovery apparatus, a first message including an article identifier that identifies the discarded article, and associating, based on the first message, a discarding time when the article is discarded with a provision time when the article is provided to the consumer.

A resource recovery system according to a fourth aspect is a system that recovers articles which can be recycled as resources. The resource recovery system includes a resource recovery apparatus that recovers the article discarded by a consumer, and a server apparatus that communicates with the resource recovery apparatus. The resource recovery apparatus transmits, to the server apparatus, a consumer identifier that identifies the consumer and a product identifier that identifies the discarded article. The article includes packaging or a container of a product. The server apparatus manages consumption history information indicating a history of the product consumed by the consumer based on the consumer identifier and the product identifier received from the resource recovery apparatus.

A server apparatus according to a fifth aspect is an apparatus that communicates with a resource recovery apparatus that recovers an article discarded by a consumer, in a resource recovery system that recovers the article that is reusable as a resource. The server apparatus includes a communicator that receives, from the resource recovery apparatus, a consumer identifier that identifies the consumer and a product identifier that identifies the discarded article, the article including packaging or a container of a product, and a processing unit that manages consumption history information indicating a history of the product consumed by the consumer based on the consumer identifier and the product identifier received from the resource recovery apparatus.

A resource recovery apparatus according to a sixth aspect is a resource recovery apparatus that recovers an article discarded by a consumer and includes a communicator that communicates with a server apparatus, in a resource recovery system that recovers the article that is reusable as a resource. The communicator transmits, to the server apparatus, a consumer identifier that identifies the consumer and a product identifier that identifies the discarded article.

A method according to a seventh aspect is a method executed by a resource recovery system that recovers articles which can be recycled as resources. The method includes communicating with a resource recovery apparatus that recovers the article discarded by a consumer, receiving, from the resource recovery apparatus, a consumer identifier that identifies the consumer and a product identifier that identifies the discarded article, and managing, based on the consumer identifier and the product identifier received from the resource recovery apparatus, consumption history information indicating a history of the product consumed by the consumer. The article includes packaging or a container of a product.

### BRIEF DESCRIPTION OF THE DRAWINGS

FIG. 1 is a diagram illustrating a configuration of a resource recovery system according to a first embodiment.
FIG. 2 is a diagram illustrating a configuration example of a resource recovery apparatus according to the first embodiment.
FIG. 3 is a diagram illustrating a configuration example of a server apparatus according to the first embodiment.
FIG. 4 is a diagram illustrating an example of information stored and managed by the server apparatus according to the first embodiment.
FIG. 5 is a diagram illustrating an operation example of the resource recovery system according to the first embodiment.
FIG. 6 is a diagram illustrating a variation of information stored and managed by the server apparatus according to the first embodiment.
FIG. 7 is a diagram illustrating a first variation of operations of the resource recovery system according to the first embodiment.
FIG. 8 is a diagram illustrating a second variation of operations of the resource recovery system according to the first embodiment.
FIG. 9 is a diagram illustrating a configuration of a resource recovery system according to a second embodiment.
FIG. 10 is a diagram illustrating an operation example of the resource recovery system according to the second embodiment.
FIG. 11 is a diagram illustrating a variation of operations of the resource recovery system according to the second embodiment.
FIG. 12 is a diagram illustrating a configuration example of a resource recovery system according to a third embodiment.
FIG. 13 is a diagram illustrating a configuration example of a resource recovery apparatus according to the third embodiment.
FIG. 14 is a diagram illustrating an example of product information stored and managed by a server apparatus according to the third embodiment.
FIG. 15 is a diagram illustrating an example of consumption history information stored and managed by the server apparatus according to the third embodiment.
FIG. 16 is a diagram illustrating an example of intake information stored and managed by the server apparatus according to the third embodiment.
FIG. 17 is a diagram illustrating an operation example of the resource recovery system according to the third embodiment.
FIG. 18 is a diagram illustrating an operation example of the resource recovery system when health damage is caused to a consumer according to the third embodiment.
FIG. 19 is a diagram illustrating an operation example of a resource recovery system when a problem is discovered in a specific product according to the third embodiment.

### DESCRIPTION OF EMBODIMENTS

Invalidating electronic tags attached to waste is not preferred in terms of utilization of data. By collecting data from the electronic tags attached to the waste and analyzing the data, new values may be created.

An object of the present disclosure is to create new values by utilizing data obtained from products discarded by consumers.

A first to a third embodiment will be described with reference to the drawings. In the description of the drawings, the same or similar parts are denoted by the same or similar reference signs.

### Outline of First and Second Embodiments

In a sequence of a lifecycle starting with manufacture of articles such as products and ending with discarding of the articles after distribution, sale, and consumption, a large amount of waste may be generated due to excessive quality control. For example, when excessive packaging, excessive cold insulators, or the like are used for products that may be consumed immediately after sale, the amount of waste emission increases.

A resource recovery system according to first and second embodiments is a system for recovering articles which can be recycled as resources. The resource recovery system includes a resource recovery apparatus that recovers the article discarded by a consumer, and a server apparatus that communicates with the resource recovery apparatus. The resource recovery apparatus transmits, to the server apparatus, a first message including an article identifier that identifies the recovered article. The server apparatus associates, based on the first message received from the resource recovery apparatus, a discarding time when the article is discarded with a provision time when the article is provided to the consumer.

In this way, by associating the discarding time when the article is discarded and the provision time when the article is provided to the consumer, the elapsed period from the provision time to the discarding time of the article can be determined for each article. By providing such elapsed period information to sellers and manufacturers of articles, packaging, cold insulators, and the like can be optimized, and the strength of products can be optimized.

### First Embodiment

### Configuration of Resource Recovery System

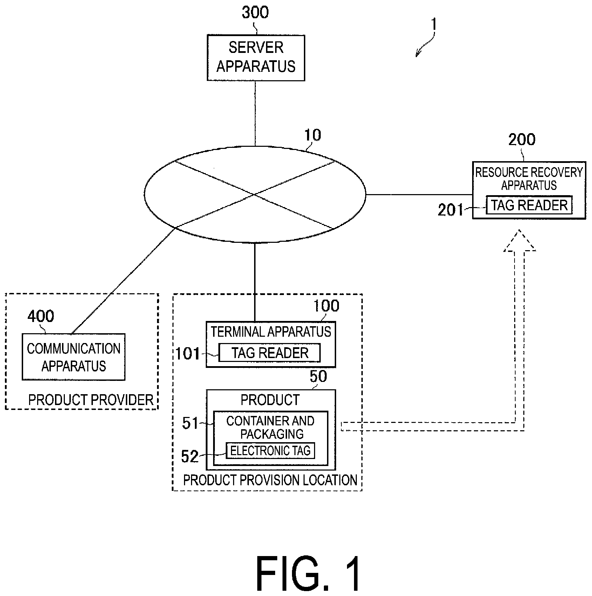

First, a configuration of a resource recovery system according to the first embodiment will be described. The resource recovery system is a system for recovering articles which can be recycled as resources. Here, the article may be any object as long as the object can be reused as a resource but includes, for example, a product and/or container and packaging of the product. FIG. 1 is a diagram illustrating a configuration of the resource recovery system 1 according to the first embodiment.

As illustrated in FIG. 1, the resource recovery system 1 includes a terminal apparatus 100, a resource recovery apparatus 200, a server apparatus 300, and a communication apparatus 400. Although FIG. 1 illustrates only one terminal apparatus 100, only one resource recovery apparatus 200, and only one communication apparatus 400, a plurality of the terminal apparatuses 100, a plurality of the resource recovery apparatuses 200, and a plurality of the communication apparatuses 400 may be provided.

The terminal apparatus 100, the resource recovery apparatus 200, the server apparatus 300, and the communication apparatus 400 are connected to a network 10. The network 10 includes at least one selected from the group consisting of a Local Area Network (LAN), a Wide Area Network (WAN), and the Internet.

The terminal apparatus 100 is an apparatus installed in a product provision location where a product 50 is provided to a consumer. The provision of the product 50 includes at least one selected from the group consisting of manufacture, distribution (shipment), and sale of the product 50. The product provision location includes at least one selected from the group consisting of a manufacture location (e.g., a factory), a shipping location, and a sale location (e.g., a store) of the product 50.

Hereinafter, the terminal apparatus 100 is mainly assumed to be installed in a store. The terminal apparatus 100 installed in the store may be referred to as a Point Of Sales (POS) terminal or a POS cash register.

The product 50 includes container and packaging 51 with an electronic tag 52. However, the electronic tag 52 may be attached to the product body except for the container and packaging 51. A product identifier identifying the product 50 is written into the electronic tag 52. The product identifier is an example of an article identifier and is an individual identifier that identifies the individual product 50.

The electronic tag 52 is of a passive type, an active type, or a semi-active type electronic tag 52. Hereinafter, an example is mainly assumed in which the electronic tag 52 of the passive type is used. The electronic tag 52 of the passive type can generate driving power by receiving a radio wave and generating power, and therefore does not use a battery.

In the first embodiment, the terminal apparatus 100 includes a tag reader 101 that reads a product identifier from the electronic tag 52. The tag reader 101 may be installed at a cash register, on a display shelf, or the like in a store. When the product 50 is provided to the consumer, the terminal apparatus 100 uses the tag reader 101 to read the product identifier from the electronic tag 52 attached to the product 50. In the present embodiment, when the product 50 is provided to the consumer mainly means when the product 50 passes by the cash register but may mean when the product 50 is taken out from the display shelf. The terminal apparatus 100 transmits a provision notification message (second message) including the read product identifier to the server apparatus 300.

The resource recovery apparatus 200 is an apparatus that recovers waste, which is the article discarded by the consumer. The resource recovery apparatus 200 is a garbage box including a communication function and may be referred to as a smart garbage box. The resource recovery apparatus 200 may be installed indoors (e.g., in a residence of the consumer or in the store) or may be installed outdoors (around the store or on a street). The resource recovery apparatus 200 may be a garbage box that is temporarily installed at an event site or the like.

The resource recovery apparatus 200 may be an apparatus that is attached to an existing garbage box or an apparatus constituting a portion of the garbage box. The type of waste to be recovered (so-called sorting type) may be configured to the resource recovery apparatus 200.

The resource recovery apparatus 200 includes a tag reader 201. The resource recovery apparatus 200 uses the tag reader 201 to read the product identifier from the electronic tag 52 attached to the waste and transmit, to the server apparatus 300, a discarding notification message (first message) including the read product identifier.

The server apparatus 300 is an apparatus that communicates with the terminal apparatus 100, the resource recovery apparatus 200, and the communication apparatus 400 via the network 10. In the first embodiment, based on the provision notification message received from the terminal apparatus 100, the server apparatus 300 identifies the provision time when the article is provided to the consumer. Based on the provision notification message received from the resource recovery apparatus 200, the server apparatus 300 identifies the discarding time when the article is discarded. Then, the server apparatus 300 associates the discarding time with the provision time for each article. Accordingly, the server apparatus 300 can calculate the elapsed period from the provision time to the discarding time for each article.

For example, the waste discarded by the consumer is the container and packaging 51 of the product 50. The server apparatus 300 uses, as the provision time, a sale time when the article 50 is sold to calculate the elapsed period from the sale time of product 50 to the discarding time of the container and packaging 51. This allows the elapsed period from sale of the product 50 until discarding of the container and packaging 51 to be understood. The server apparatus 300 may calculate a statistical value (for example, an average value) of the elapsed period for the same type of products 50.

The server apparatus 300 transmits elapsed period information related to the elapsed period to the communication apparatus 400 of a business operator (product provider) providing the article (product 50). The communication apparatus 400 is a terminal apparatus or a server apparatus. The product provider is a business operator that manufactures products (so-called, manufacturer), a business operator that ships products, or a business operator that sells products.

The elapsed period information may include the elapsed period or the statistical value thereof calculated by the server apparatus 300 or may include a set of the provision time and the discarding time associated with each other by the server apparatus 300. The elapsed period information may further include the product identifier of the corresponding product 50. By thus transmitting the elapsed period information to the communication apparatus 400 of the product provider, the product provider can optimize a package, a cold insulator, or the like, and optimize the strength of the product. Optimization of the package, the cold insulator, or the like allows the amount of waste emission to be suppressed.

### Configuration Example of Resource Recovery Apparatus

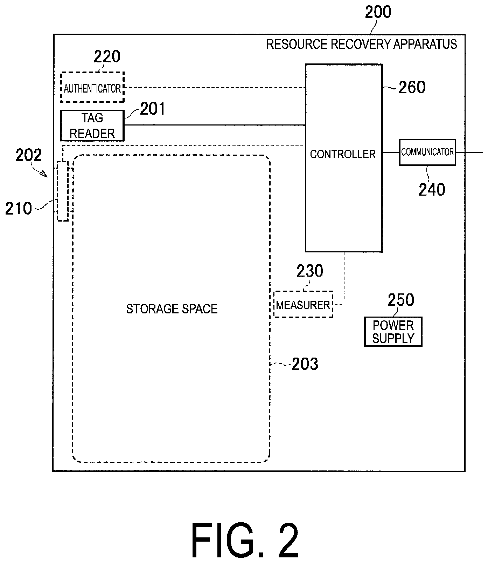

A configuration example of the resource recovery apparatus 200 will be described. FIG. 2 is a diagram illustrating a configuration example of the resource recovery apparatus 200. In FIG. 2, dashed lines illustrate components that are optional.

As illustrated in FIG. 2, in addition to the tag reader 201 described above, the resource recovery apparatus 200 includes an opening 202, a storage space 203, an opener/closer 210, an authenticator 220, a measurer 230, a communicator 240, a power supply 250, and a controller 260.

Under the control of the controller 260, the tag reader 201 reads the product identifier from the electronic tag 52 attached to the waste passing through the opening 202 and outputs the read product identifier to the controller 260. The tag reader 201 may not perform a reading operation when the opening 202 is in a closed state and may perform the reading operation when the opening 202 is in an open state. The reading operation includes an operation of transmitting radio waves from the tag reader 201. By not performing the reading operation when the opening 202 is in the closed state, the power consumption of the resource recovery apparatus 200 can be suppressed.

The tag reader 201 may periodically perform the operation of reading product identifiers collectively from the electronic tags 52 of the pieces of waste accumulated in the storage space 203. In a case that the number of product identifiers at the time of current read increases compared to the time of previous read, the controller 260 considers that the increase in the number of read product identifiers corresponds to the product identifiers of newly discarded waste.

In addition to the tag reader 201 or instead of the tag reader 201, a camera and/or a barcode reader for identifying the product 50 (waste) may be provided. The camera may capture an image of the waste and identify the product 50 by using the image capturing result. The barcode reader may read a barcode (or two-dimensional code) attached to the waste and identify the product 50 using the reading result.

The opening 202 is an opening provided between a front surface or a side surface of the resource recovery apparatus 200 and the storage space 203. The waste is thrown into the storage space 203 via the opening 202.

The storage space 203 is a space for storing waste. The storage space 203 may be provided with a replaceable container or a garbage bag.

The opener/closer 210 is provided at the opening 202 and opens and closes the opening 202 under the control of the controller 260. The opener/closer 210 includes a lid (shutter) that covers the opening 202, and an actuator that opens and closes the lid. In the opener/closer 210, the state in which the lid is open is referred to as an open state, and the state in which the lid is closed is referred to as a closed state.

The authenticator 220 authenticates, under the control of the controller 260, a consumer that discards waste. The authenticator 220 may execute authentication processing in cooperation with the server apparatus 300. The authenticator 220 includes at least one selected from the group consisting of a barcode reader used for barcode authentication, an image sensor (camera) used for face authentication, and a wireless communicator used for Near Field Communication (NFC) authentication. The authenticator 220 may acquire a consumer identifier for identifying the consumer by authentication. By performing such personal authentication, the fraudulent use of the resource recovery apparatus 200 such as non-compliance with segregation, or discarding of hazardous materials can be suppressed.

The measurer 230 measures the amount of waste in the storage space 203 or the free space in the storage space 203 under the control of the controller 260. The measurer 230 includes at least one selected from the group consisting of a weight sensor that measures the weight of the waste accumulated in the storage space 203, a sensor that measures the height of the waste accumulated in the storage space 203 (e.g., ultrasonic sensor), and a counter that counts the number of times that waste is thrown into the storage space 203 (the number of switching between the open state and the closed state in the opener/closer 210).

The communicator 240 includes a communication interface connected to the network 10 in a wired or wireless manner. The communicator 240 communicates with the server apparatus 300 via the network 10.

The power supply 250 supplies driving power to each unit of the resource recovery apparatus 200. For example, the power supply 250 supplies driving power used for the reading operation performed by the tag reader 201, and driving power used for the opening and closing operation of the actuator of the opener/closer 210. The power supply 250 may include a primary battery or a secondary battery or may include a power converter that converts electrical power from a commercial power grid. The power supply 250 may include a power generating portion such as a photovoltaic cell. In a case that the power supply 250 includes the power generating portion, battery change or power feeding from the outside to the resource recovery apparatus 200 can be suppressed.

The controller 260 controls the power supply 250 such that the electrical power output by the power generating portion (e.g., photovoltaic cell) included in the power supply 250 is used as the driving power described above. For example, the controller 260 controls the photovoltaic cell to directly utilize the generated power of the photovoltaic cell when the weather is fine. When driving is not required, the controller 260 may charge a secondary battery or the like with the generated power. The controller 260 may charge the secondary battery with electrical power from the power grid or directly utilize the electrical power from the power grid for driving when the weather is rainy or cloudy, or the photovoltaic cell is shadowed (when the photovoltaic cell generates no power). Here, the controller 260 may determine the weather based on the output power from the photovoltaic cell or based on weather information acquired from an external server via the communicator 240. The weather information is information indicating the current weather and/or the future weather of a region including the installation position of the resource recovery apparatus 200.

The controller 260 controls each unit of the resource recovery apparatus 200. The controller 260 includes at least one processor and at least one memory electrically connected to the processor.

In a case of successfully authenticating the consumer by using the authenticator 220, the controller 260 may switch the opener/closer 210 from the closed state to the open state. On the other hand, in a case of failing to authenticate the consumer by using the authenticator 220, the controller 260 may maintain the opener/closer 210 in the closed state. This allows for only a consumer with legitimate authority to utilize the resource recovery apparatus 200. Note that the controller 260 may cause the tag reader 201 to perform the reading operation during the period when the opener/closer 210 is in the open state.

Here, the controller 260 may send, to the server apparatus 300, a query or a request about an identified consumer to determine whether the consumer is legitimate. Alternatively, the server apparatus 300 may determine whether the consumer is legitimate and notify the resource recovery apparatus 200 of the result of the determination, and the controller 260 may control the opening and closing accordingly.

After switching the opener/closer 210 from the closed state to the open state, the controller 260 may switch the opener/closer 210 from the open state to the closed state when a closing condition is satisfied. The closing condition includes at least one selected from the group consisting of 1) condition that a certain time has elapsed since switching to the open state, 2) condition that the tag reader 201 has newly read the product identifier from the electronic tag 52 of the waste, 3) condition that a certain time has elapsed since the tag reader 201 has newly read the product identifier from the electronic tag 52 of the waste, and 4) condition that the authenticator 220 has performed the second authentication on the same consumer.

The controller 260 acquires a product identifier read by the tag reader 201 from the electronic tag 52 attached to the waste, generates a discarding notification message including the product identifier, and transmits the discarding notification message to the server apparatus 300 via the communicator 240.

In a case that the controller 260 has a clocking function, the controller 260 may generate a discarding time information (a time stamp) indicating the discarding time of the waste, and store, in the buffer, and manage the discarding time information in association with the product identifier. When a transmission condition is satisfied, the controller 260 may transmit, to the server apparatus 300, the discarding notification message including at least one set of the product identifier and the discarding time information.

The transmission condition includes 1) condition that a transmission opportunity has arrived according to the periodic transmission period and/or 2) condition that a buffer accumulation amount has exceeded a threshold value. By accumulating, in the buffer, and managing the discarding time information in association with the product identifier as described above, the transmission of the discarding notification message can be suspended until the transmission condition is satisfied, and thus the data communication amount and the power consumption of the resource recovery apparatus 200 can be suppressed.

When acquiring a product identifier read by the tag reader 201 from the electronic tag 52 attached to the waste, the controller 260 may immediately transmit, to the server apparatus 300, the discarding notification message including the product identifier. In this case, the controller 260 may not include the discarding time information in the discarding notification message, and the controller 260 may not include the clocking function or a large-capacity buffer. Thus, the configuration of the resource recovery apparatus 200 can be simplified.

When transmitting the discarding notification message to the server apparatus 300, the controller 260 may include, in the discarding notification message, measurement information indicating a measurement result of the measurer 230 at that time. Accordingly, the server apparatus 300 can understand the amount of waste in the storage space 203 or the free space in the storage space 203 based on the discarding notification message.

When transmitting the discarding notification message to the server apparatus 300, the controller 260 may include, in the discarding notification message, the discarding location information indicating the installation location (i.e., discarding location) of the resource recovery apparatus 200. The discarding location information is latitude and longitude information indicating the installation location of the resource recovery apparatus 200, or facility information indicating the name of the facility (e.g., a store) corresponding to the installation location of the resource recovery apparatus 200. The discarding location information may be stored in advance by the controller 260. In a case that the resource recovery apparatus 200 includes a Global Navigation Satellite System (GNSS) receiver, the resource recovery apparatus 200 may use GNSS position information as the discarding location information.

In a case that the installation location of the resource recovery apparatus 200 is fixed, the server apparatus 300 may store the discarding location information, in advance, in association with the identifier of the resource recovery apparatus 200. In this case, when transmitting the discarding notification message to the server apparatus 300, the controller 260 includes the identifier of the resource recovery apparatus 200 in the discarding notification message. The server apparatus 300 can identify the discarding location information based on the identifier of the resource recovery apparatus 200.

### Configuration Example of Server Apparatus

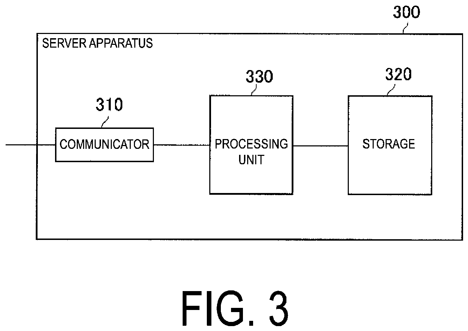

A configuration example of the server apparatus 300 according to an embodiment will be described. FIG. 3 is a diagram illustrating a configuration example of the server apparatus 300.

As illustrated in FIG. 3, the server apparatus 300 includes a communicator 310, a storage 320, and a processing unit 330.

The communicator 310 includes a communication interface connected to the network 10 in a wired or wireless manner. The communicator 310 communicates with the terminal apparatus 100, the resource recovery apparatus 200, and the communication apparatus 400 via the network 10.

The storage 320 stores various types of information used for information processing executed by the processing unit 330. The storage 320 includes an auxiliary storage apparatus such as a Hard Disk Drive (HDD) or a Solid State Drive (SSD). The processing unit 330 causes the storage 320 to store information and updates the information stored in the storage 320.

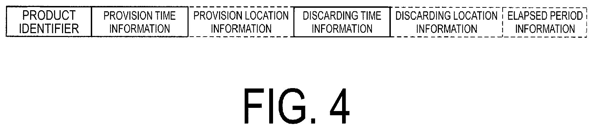

FIG. 4 is a diagram illustrating an example of information stored by the storage 320. In FIG. 4, dashed lines illustrate information that is optional.

As illustrated in FIG. 4, the storage 320 stores, for each product, at least one selected from the group consisting of the product identifier, the provision time information, the provision location information, the discarding time information, the discarding location information, and the elapsed period information.

The product identifier is an individual identifier for identifying the product. The provision time information is information indicating the provision time (sale time ) when the article (product 50) is provided to the consumer. The provision location information is information indicating the provision location (product provision location) where the article (product 50) is provided to the consumer. The provision location information may include information of a business operator (company) operating a store such as a franchise store or a chain store. The discarding time information is information indicating the discarding time when the article (e.g., the container and packaging 51 of the product 50) is discarded. The discarding location information is information indicating the discarding location where the article (e.g., the container and packaging 51 of the product 50) is discarded. The elapsed period information is information indicating the time from the provision time (sale time ) indicated by the provision time information until the discarding time indicated by the discarding time information.

The processing unit 330 executes various types of information processing, based on information received by the communicator 310 and information stored in the storage 320. The processing unit 330 includes at least one processor and at least one memory electrically connected to the processor.

First, when the communicator 310 receives the provision notification message from the terminal apparatus 100, the processing unit 330 acquires the product identifier and the provision location information included in the provision notification message, associates the product identifier acquired with the provision location information acquired, and causes the storage 320 to store the resultant information.

Here, when the installation location of the terminal apparatus 100 is fixed, the storage 320 may store the provision location information in advance in association with the identifier of the terminal apparatus 100. In this case, when transmitting the provision notification message to the server apparatus 300, the terminal apparatus 100 includes the identifier of the terminal apparatus 100 in the provision notification message. The processing unit 330 identifies the provision location information based on this identifier.

The processing unit 330 identifies the provision time information based on the provision notification message and causes the storage 320 to store the identified provision time information in association with the product identifier. When the provision notification message includes the provision time information, the processing unit 330 identifies the provision time information by acquiring the provision time information included in the provision notification message.

On the other hand, in a case that the terminal apparatus 100 transmits the provision notification message to the server apparatus 300 immediately when the provision of the article is detected, the provision notification message may not include the provision time information. In this case, the processing unit 330 considers a time when the communicator 310 receives the provision notification message from the terminal apparatus 100 to be the provision time and identifies information indicating the time of the reception as provision time information.

Second, when the communicator 310 receives the discarding notification message from the resource recovery apparatus 200, the processing unit 330 acquires the product identifier and the discarding location information included in the discarding notification message, associates the product identifier acquired with the discarding location information acquired, and causes the storage 320 to store the resultant information.

Here, when the installation location of the resource recovery apparatus 200 is fixed, the storage 320 may store the discarding location information in advance in association with the identifier of the resource recovery apparatus 200. In this case, when transmitting the discarding notification message to the server apparatus 300, the resource recovery apparatus 200 includes the identifier of the resource recovery apparatus 200 in the discarding notification message. The processing unit 330 identifies the discarding location information based on this identifier.

The processing unit 330 identifies the discarding time information based on the discarding notification message and causes the storage 320 to store the identified discarding time information in association with the product identifier. In a case that the discarding notification message includes the discarding time information, the processing unit 330 identifies the discarding time information by acquiring the discarding time information included in the discarding notification message.

On the other hand, in a case that the resource recovery apparatus 200 transmits the discarding notification message to the server apparatus 300 immediately when the discarding of the article is detected, the discarding notification message may not include the discarding time information. In this case, the processing unit 330 considers a time when the communicator 310 receives the discarding notification message from the resource recovery apparatus 200 to be the discarding time and identifies information indicating the time of the reception as discarding time information.

As described above, the processing unit 330 associates the product identifier with the provision time information as well as the discarding time information based on the provision notification message and the discarding notification message. In a case that the terminal apparatus 100 is installed in the store, the sale time information corresponds to the provision time information.

Third, the processing unit 330 calculates the elapsed period from the provision of the product 50 indicated by the product identifier until the discarding of the product 50 based on the association between the product identifier, the provision time information, and the discarding time information. The processing unit 330 may accumulate the elapsed period information for each product 50 and may calculate the statistical value (e.g., average value) of the elapsed periods for the same type of products 50.

Fourth, the processing unit 330 transmits information as illustrated in FIG. 4 to the communication apparatus 400 of the product provider via the communicator 310. Here, the processing unit 330 transmits, to the communication apparatus 400, the elapsed period information related to the elapsed period. The elapsed period information may include the elapsed period or the statistical value thereof calculated by the processing unit 330 or may include a set of the provision time and the discarding time associated with each other by the processing unit 330.

### Operation Example of Resource Recovery System

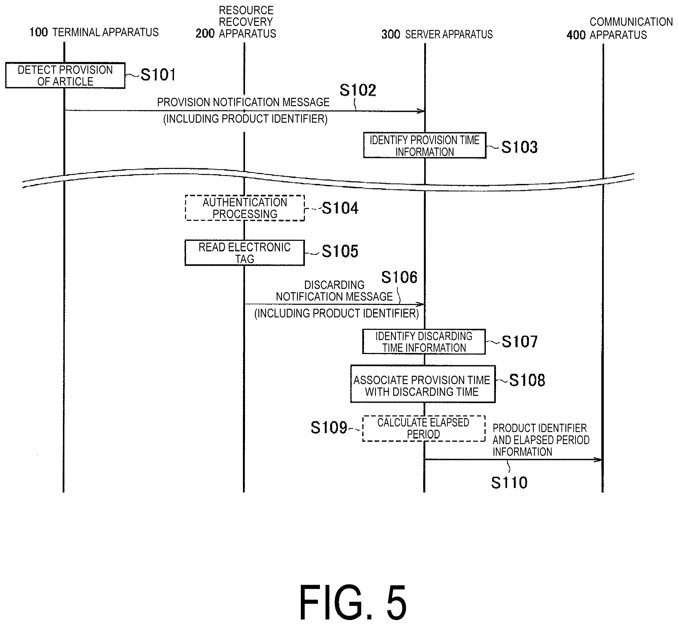

An operation example of the resource recovery system 1 according to the first embodiment will be described. FIG. 5 is a diagram illustrating an operation example of the resource recovery system 1 according to the first embodiment. In FIG. 5, dashed lines illustrate steps that are optional.

As illustrated in FIG. 5, in step S101, the terminal apparatus 100 detects the provision of the article (product 50) to the consumer.

In step S102, the terminal apparatus 100 transmits, to the server apparatus 300, the provision notification message including the product identifier for identifying the article (product 50) provided to the consumer. The provision notification message may include provision time information.

In step S103, the server apparatus 300 identifies the provision time information based on the provision notification message from the terminal apparatus 100. The server apparatus 300 stores the identified provision time information in association with the product identifier.

Subsequently, in step S104, the resource recovery apparatus 200 performs authentication processing on the consumer attempting to discard the article (e.g., the container and packaging 51 of the product 50). In a case that the consumer is successfully authenticated, the resource recovery apparatus 200 accepts discarding (input) of the article.

In step S105, the resource recovery apparatus 200 reads the product identifier from the electronic tag 52 attached to the waste.

In step S106, the resource recovery apparatus 200 transmits, to the server apparatus 300, the discarding notification message including the product identifier read in step S105. The discarding notification message may include discarding time information.

In step S107, the server apparatus 300 identifies the discarding time information based on the discarding notification message from the resource recovery apparatus 200.

In step S108, the server apparatus 300 associates the discarding time information identified in step S107 as well as the provision time information identified in step S 103 with the product identifier.

In step S109, the server apparatus 300 calculates the elapsed period based on the association in step S108.

In step S110, the server apparatus 300 transmits, to the communication apparatus 400, a set of the elapsed period information related to the elapsed period and the product identifier.

### Variations of First Embodiment

A variation of operation of the resource recovery system 1 according to the first embodiment will be described.

The elapsed period from the provision of the product to the consumer until discarding of the product may vary depending on the characteristics (e.g., lifestyle) of the consumer. In the present variation, by deriving the elapsed period information for each consumer, the package, the cold insulator, or the like can be optimized for each consumer.

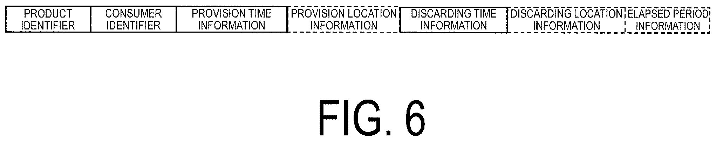

FIG. 6 is a diagram illustrating an example of information stored and managed by the server apparatus 300 according to the present variation. In FIG. 6, dashed lines illustrate steps that are optional.

As illustrated in FIG. 6, the server apparatus 300 stores, for each product, at least one selected from the group consisting of the product identifier, the consumer identifier, the provision time information, the provision location information, the discarding time information, the discarding location information, and the elapsed period information. The consumer identifier is an identifier for identifying the consumer provided with the product indicated by the product identifier. That is, the server apparatus 300 according to the present variation is different from the first embodiment described above in that the server apparatus 300 according to the present variation further manages the consumer identifier in association with the product identifier.

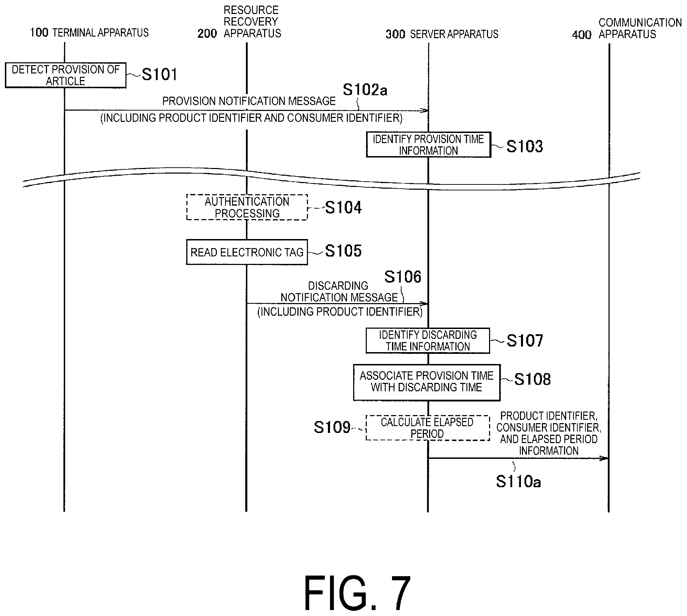

FIG. 7 is a diagram illustrating a first variation of operations of the resource recovery system 1 according to the first embodiment. Here, differences from the operations of the resource recovery system 1 according to the first embodiment described above (see FIG. 5) will be described.

As illustrated in FIG. 7, in step S102a, the terminal apparatus 100 transmits, to the server apparatus 300, the provision notification message including the product identifier for identifying the article (product 50) provided to the consumer, and the consumer identifier for identifying the consumer. For example, in a case that electronic payment is used for payment for the product 50, the consumer identifier can be obtained from the information of the electronic payment. The server apparatus 300 acquires the product identifier and the consumer identifier included in the provision notification message from the terminal apparatus 100 and manages the product identifier and the consumer identifier in association with each other.

In step S110a, the server apparatus 300 transmits a set of the product identifier, the consumer identifier, and the elapsed period information to the communication apparatus 400.

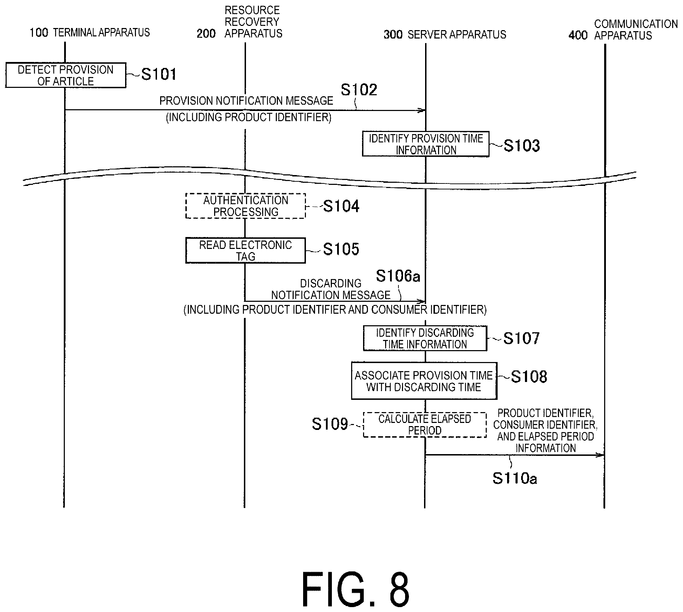

FIG. 8 is a diagram illustrating a second variation of operations of the resource recovery system 1 according to the first embodiment. Here, differences from the operations of the resource recovery system 1 according to the first embodiment described above (see FIG. 5) will be described.

As illustrated in FIG. 8, in step S106a, the resource recovery apparatus 200 transmits, to the server apparatus 300, the discarding notification message including the product identifier read in step S105 and the consumer identifier of a consumer recognized by the personal authentication in step S104. The server apparatus 300 acquires the product identifier and consumer identifier included in the discarding notification message from the resource recovery apparatus 200 and manages the product identifier and the consumer identifier in association with each other.

In step S110a, the server apparatus 300 transmits a set of the product identifier, the consumer identifier, and the elapsed period information to the communication apparatus 400.

### Second Embodiment

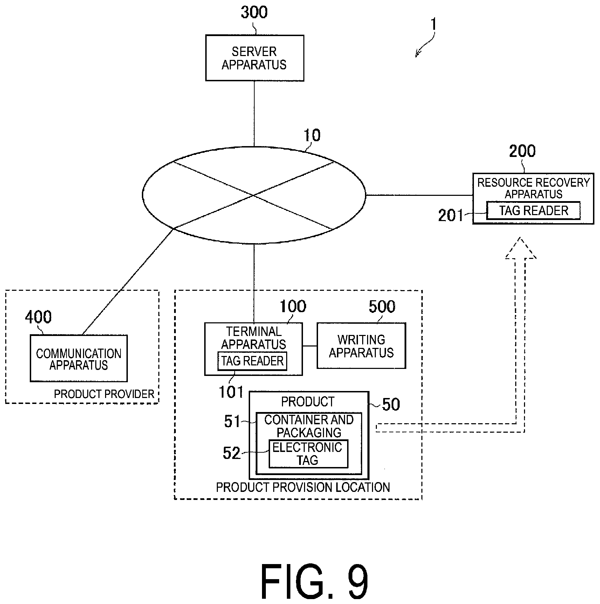

A second embodiment will be described while focusing on differences from the above-described first embodiment. FIG. 9 is a diagram illustrating a configuration of the resource recovery system 1 according to the second embodiment.

As illustrated in FIG. 9, the resource recovery system 1 according to the second embodiment is different from the first embodiment in that the resource recovery system 1 according to the second embodiment further includes a writing apparatus 500. The writing apparatus 500 is an apparatus (tag writer) installed at a product provision location where the product 50 is provided to the consumer. In the second embodiment, the terminal apparatus 100 may not include the tag reader 101. The tag reader 101 may be integrated with the writing apparatus 500. The terminal apparatus 100 according to the second embodiment may not always perform communication with the server apparatus 300.

The writing apparatus 500 writes, to the electronic tag 52 attached to the product 50, the provision time information indicating the provision time of the product 50. As a result, in addition to the product identifier, the provision time information is written in the electronic tag 52.

In the second embodiment, the resource recovery apparatus 200 reads the product identifier and the provision time information from the electronic tag 52 attached to the waste and transmits, to the server apparatus 300, the discarding notification message including the product identifier and the provision time information. The server apparatus 300 identifies the provision time based on the provision time information included in the discarding notification message.

The writing apparatus 500 may further write, to the electronic tag 52, the provision location information indicating the provision location where the product 50 is provided to the consumer. The provision location information is latitude and longitude information indicating the product provision location or facility information indicating the name of the facility (for example, a store) corresponding to the product provision location. The provision location information may include information of a business operator (company) operating a store such as a franchise store or a chain store.

In this case, the resource recovery apparatus 200 further reads out the provision location information from the electronic tag 52 and transmits, to the server apparatus 300, the discarding notification message further including the provision location information. The server apparatus 300 acquires the provision location information included in the discarding notification message.

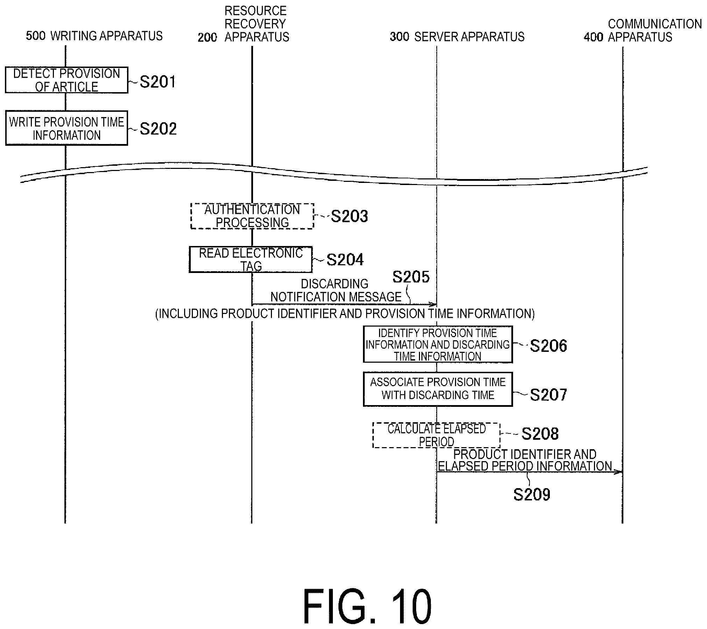

An operation example of the resource recovery system 1 according to the second embodiment will be described. FIG. 10 is a diagram illustrating an operation example of the resource recovery system 1 according to the second embodiment. In FIG. 10, dashed lines illustrate steps that are optional.

As illustrated in FIG. 10, in step S201, the writing apparatus 500 detects provision of the article (product 50) to the consumer.

In step S202, the writing apparatus 500 writes the provision time information to the electronic tag 52.

Subsequently, in step S203, the resource recovery apparatus 200 performs authentication processing on the consumer attempting to discard the article (e.g., the container and packaging 51 of the product 50). In a case that the consumer is successfully authenticated, the resource recovery apparatus 200 accepts discarding (input) of the article.

In step S204, the resource recovery apparatus 200 reads the product identifier and the provision time information from the electronic tag 52 attached to the waste.

In step S205, the resource recovery apparatus 200 transmits, to the server apparatus 300, the discarding notification message including the product identifier and the provision time information read in step S205. The discarding notification message may include discarding time information.

In step S206, the server apparatus 300 identifies the provision time information and the discarding time information based on the discarding notification message from the resource recovery apparatus 200. Here, the server apparatus 300 identifies the provision time information by acquiring the provision time information included in the discarding notification message.

In step S207, the server apparatus 300 associates the provision time information as well as the discarding time information identified in step S206 with the product identifier.

In step S208, the server apparatus 300 calculates the elapsed period based on the association in step S207.

In step S209, the server apparatus 300 transmits, to the communication apparatus 400, a set of the elapsed period information related to the elapsed period and the product identifier.

### Variation of Second Embodiment

The elapsed period from the provision of the product to the consumer until discarding of the product may vary depending on the characteristics (e.g., lifestyle) of the consumer. In the present variation, by deriving such elapsed period information for each consumer, the package, the cold insulator, or the like can be optimized for each consumer.

The information stored and managed by the server apparatus 300 according to the present variation is the same as and/or similar to the information in the variation (see FIG. 6) of the first embodiment. Specifically, the writing apparatus 500 according to the present variation further writes the consumer identifier to the electronic tag 52 attached to the article (product 50). The resource recovery apparatus 200 reads the consumer identifier from the electronic tag 52 and transmits, to the server apparatus 300, the discarding notification message further including the consumer identifier. Thus, the server apparatus 300 manages the product identifier and the consumer identifier in association with each other.

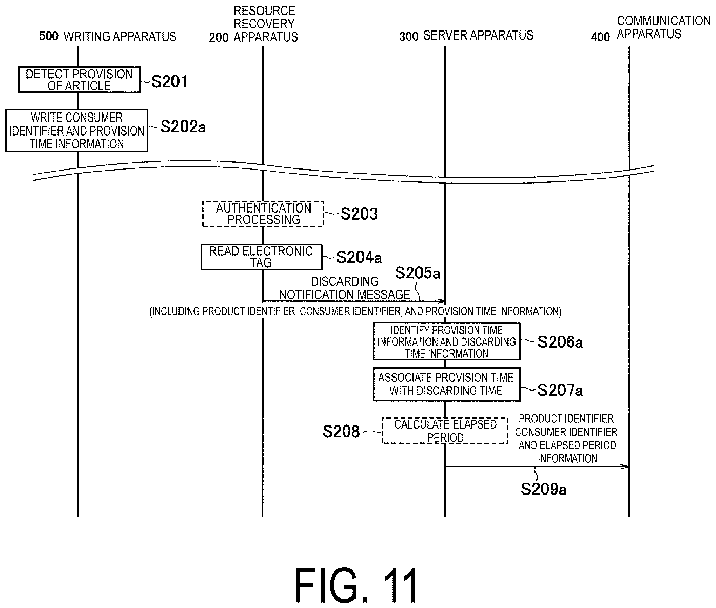

FIG. 11 is a diagram illustrating a variation of operation of the resource recovery system 1 according to the second embodiment. Here, differences from operations of the resource recovery system 1 according to the second embodiment described above (see FIG. 10) will be described.

As illustrated in FIG. 11, in step S202a, the writing apparatus 500 writes the provision time information to the electronic tag 52 and also writes, to the electronic tag 52, the consumer identifier for identifying the consumer provided with the article (product 50). For example, in a case that electronic payment is used for payment for the product 50, the consumer identifier can be obtained from the information of the electronic payment.

In step S204a, the resource recovery apparatus 200 reads the product identifier, the consumer identifier, and the provision time information from the electronic tag 52 attached to the waste.

In step S205a, the resource recovery apparatus 200 transmits, to the server apparatus 300, the discarding notification message including the product identifier, the consumer identifier, and the provision time information read in step S205. The discarding notification message may include discarding time information.

In step S206a, the server apparatus 300 identifies the provision time information and the discarding time information based on the discarding notification message from the resource recovery apparatus 200. Here, the server apparatus 300 identifies the provision time information by acquiring the provision time information included in the discarding notification message.

In step S207a, the server apparatus 300 associates the provision time information as well as the discarding time information identified in step S206 with the product identifier and the consumer identifier.

In step S209a, the server apparatus 300 transmits a set of the product identifier, the consumer identifier, and the elapsed period information to the communication apparatus 400.

### Outline of Third Embodiment

After purchasing a product at a store, the consumer consumes the product and discards the product packaging or container (hereinafter referred to as the "container and packaging") of the product. For example, in a case that the product 50 is a food or a beverage, then after purchasing the food or beverage at the store, the consumer takes in the food or beverage and discards the container and packaging. In recent years, the electronic payment service has been becoming popular, and utilizing electronic payment information may allow which product the consumer has purchased to be understood.

However, in the current situation, many consumers and stores do not utilize the electronic payment service. A single consumer may collectively purchase products for a plurality of persons, and thus which product an individual consumer has actually consumed is difficult to determine.

A resource recovery system according to a third embodiment is a system for recovering articles which can be recycled as resources. The resource recovery system includes a resource recovery apparatus that recovers the article discarded by a consumer, and a server apparatus that communicates with the resource recovery apparatus. The resource recovery apparatus transmits, to the server apparatus, a consumer identifier that identifies the consumer and a product identifier that identifies the discarded article. The article includes packaging or a container of a product. The server apparatus manages consumption history information indicating a history of the product consumed by the consumer based on the consumer identifier and the product identifier received from the resource recovery apparatus.

Thus, the resource recovery apparatus can inform the server apparatus which consumer has consumed which product, and the server apparatus can understand and manage a history of the consumed product for each consumer. This allows, for example, a high value-added service such as assistance of healthcare for each consumer to be provided.

### Third Embodiment

The third embodiment will be described focusing on differences from the first and second embodiments, and the description of similar or identical configurations will be omitted.

### Configuration Example of Resource Recovery System

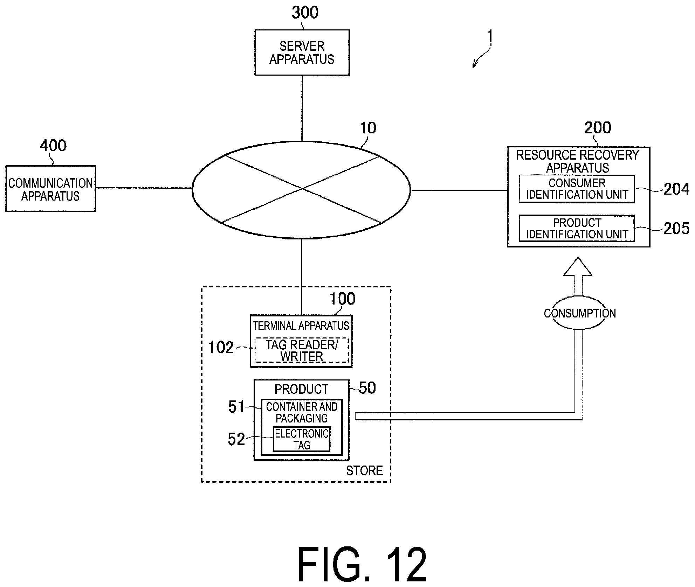

First, a configuration example of a resource recovery system according to the third embodiment will be described. The resource recovery system is a system for recovering articles which can be recycled as resources. Here, the article may be any object as long as the object can be reused as a resource but includes, for example, a product and/or container and packaging of the product. FIG. 12 is a diagram illustrating a configuration of the resource recovery system 1 according to the third embodiment.

As illustrated in FIG. 12, the resource recovery system 1 includes the terminal apparatus 100, the resource recovery apparatus 200, the server apparatus 300, and the communication apparatus 400. Although FIG. 12 illustrates only one terminal apparatus 100, only one resource recovery apparatus 200, and only one communication apparatus 400, a plurality of the terminal apparatuses 100, a plurality of the resource recovery apparatuses 200, and a plurality of the communication apparatuses 400 may be provided.

The terminal apparatus 100, the resource recovery apparatus 200, the server apparatus 300, and the communication apparatus 400 are connected to a network 10. The network 10 includes at least one selected from the group consisting of a Local Area Network (LAN), a Wide Area Network (WAN), and the Internet.

The terminal apparatus 100 is an apparatus installed in a store where the product 50 is sold to the consumer. The store is, for example, a convenience store, a supermarket, or the like. The terminal apparatus 100 installed in such a store may be referred to as a POS terminal or a POS cash register.

The product 50 is, for example, a food or beverage. The product 50 includes container and packaging 51 with an electronic tag 52. However, the electronic tag 52 may be attached to the product body except for the container and packaging 51. At least the product identifier indicating the product 50 is written in the electronic tag 52. Although the product identifier is intended to be the individual identifier of the product 50, the product identifier may be the product name of the product 50, or the product identifier may be a set of the individual identifier and the product name.

The electronic tag 52 is of a passive type, an active type, or a semi-active type electronic tag 52. Hereinafter, an example is mainly assumed in which the electronic tag 52 of the passive type is used. The electronic tag 52 of the passive type can generate driving power by receiving a radio wave and generating power, and therefore does not use a battery.

The terminal apparatus 100 may include a tag reader/writer 102 that performs an operation of reading information from the electronic tag 52 and/or an operation of writing information to the electronic tag 52. For example, when the product 50 is sold to the consumer, the terminal apparatus 100 uses the tag reader/writer 102 to read the information from the electronic tag 52 attached to the product 50. The terminal apparatus 100 transmits, to the server apparatus 300, a sale notification message including the information read from the electronic tag 52. The tag reader/writer 102 may write, to the electronic tag 52, at least one type of information selected from the group consisting of the consumer identifier for identifying the consumer, sale location information indicating a sale location (store) of the product 50, and sale time information indicating a sale time of the product 50.

The resource recovery apparatus 200 is an apparatus that recovers waste, which is the article discarded by the consumer. The waste is, for example, the container and packaging 51 of the product 50. The resource recovery apparatus 200 is a garbage box including a communication function and may be referred to as a smart garbage box. The resource recovery apparatus 200 may be installed indoors (e.g., in a residence of the consumer or in the store) or may be installed outdoors (around the store or on a street). The resource recovery apparatus 200 may be a garbage box that is temporarily installed at an event site or the like.

The resource recovery apparatus 200 may be an apparatus that is attached to an existing garbage box or an apparatus constituting a portion of the garbage box. The type of waste to be recovered (so-called sorting type) may be configured to the resource recovery apparatus 200.

The resource recovery apparatus 200 includes a consumer identification unit 204 that identifies a consumer that discards a waste in the resource recovery apparatus 200, and a product identification unit 205 that identifies the waste (product 50) discarded by the consumer. At least some of the functions of the consumer identification unit 204 and the product identification unit 205 may be common. The consumer identification unit 204 may identify the consumer in cooperation with the server apparatus 300. The product identification unit 205 may identify the product in cooperation with the server apparatus 300.

The consumer identification unit 204 may include a camera that captures an image of the consumer and may identify the consumer by using the image capturing result. The consumer identification unit 204 may include a barcode reader that reads a barcode (or two-dimensional code) from a ticket or a mobile terminal carried by the consumer and may identify the consumer by using the reading result. The consumer identification unit 204 may include a wireless communicator that performs wireless communication by Near Field Communication (NFC) with an IC card or a mobile terminal carried by the consumer and may identify the consumer by using the communication result.

The product identification unit 205 may include a tag reader that reads the product identifier from the electronic tag 52 attached to the waste and may identify the product 50 by using the reading result. The product identification unit 205 may include a camera that captures an image of the waste and may identify the product 50 by using the image capturing result. The product identification unit 205 may include a barcode reader that reads a barcode (or two-dimensional code) attached to the waste and may identify the product 50 by using the reading result. A configuration in which the product identification unit 205 includes the tag reader will be mainly described below.

The resource recovery apparatus 200 transmits, to the server apparatus 300, the discarding notification message including the consumer identifier of the identified consumer and the product identifier of the identified product. Here, the resource recovery apparatus 200 associates the consumer identifier with the product identifier and transmits the associated identifiers to the server apparatus 300.

The server apparatus 300 is an apparatus that communicates with the terminal apparatus 100, the resource recovery apparatus 200, and the communication apparatus 400 via the network 10. The server apparatus 300 manages consumption history information indicating a history of the product 50 consumed by the consumer based on the consumer identifier and the product identifier received from the resource recovery apparatus 200. The consumption history information is information including the consumer identifier for identifying the consumer and the product identifier of each product 50 consumed by the consumer. The consumption history information may further include the discarding time information indicating the discarding time for each product 50 consumed by the consumer.

The server apparatus 300 may manage intake information indicating at least one selected from the group consisting of nutrients, calories, and allergic substances taken in by the consumer based on the consumption history information. The allergic substance includes, e.g., an egg, milk, wheat, shrimps, crabs, peanuts, and soba.

The intake information may include at least one statistical value selected from the group consisting of the nutrients, the calories intake, and the allergic substances taken in by the consumer during a predetermined period (e.g., one day, one week, or one month). The statistical value may be a total value, an average value, a maximum value, or a minimum value. Based on the nutrients taken in by the consumer, the server apparatus 300 may identify an insufficient nutrient and include, in the intake information, information indicating the insufficient nutrient and/or information indicating a recommended menu.

The resource recovery apparatus 200 may measure the weight of the waste and transmit, to the server apparatus 300, the discarding notification message further including weight measurement information related to the measured weight. Based on the weight measurement information, the server apparatus 300 may manage waste amount information indicating the amount of food or beverage left over by the consumer. The server apparatus 300 may modify the intake information based on the waste amount information.

In a case that the consumer suffers health damage (e.g., food poisoning), the server apparatus 300 may determine, based on the consumption history information of the consumer, the product 50 having caused the health damage among the products 50 taken in by the consumer and may manage causal product information indicating the determination result. Here, in a case that two or more consumers among a plurality of consumers suffer the health damage, the server apparatus 300 may estimate, as the cause of the health damage, the product (product name) taken in by the two or more consumers in common based on the consumption history information of each of the two or more consumers.

In a case that a problem (for example, foreign matter contamination) is discovered in a particular product, the server apparatus 300 may determine, based on the consumption history information, whether the consumer has consumed a related product that is of the same type as the type of the particular product and that is related to the particular product and may manage related consumer information indicating the determination result. The related product may be a product manufactured in the same lot as that of the particular product.

The server apparatus 300 transmits, to the communication apparatus 400, at least one selected from the group consisting of the consumption history information, the intake information, the waste amount information, the causal product information, and the related consumer information. The server apparatus 300 may transmit information to the communication apparatus 400 in response to a request from the communication apparatus 400.

The communication apparatus 400 may be a communication terminal carried by the consumer. For example, the consumer can understand, based on the intake information, what nutrients or allergic substances the consumer has actually taken in or what calories the consumer has taken in.

The communication apparatus 400 may be a communication terminal or a server of the business operator manufacturing or selling the product 50 (food or beverage). For example, the business operator can understand the amount of waste of the product 50 based on the waste amount information and adjust the amount of contents of a product 50 to be newly provided. Based on the discarding time information included in the consumption history information, the business operator can estimate the period of time before the consumption (intake) of the sold product 50 and appropriately configure an expiration date for the product 50.

The communication apparatus 400 may be a communication terminal or a server of a medical institution or a fitness operator associated with the consumer. For example, based on the intake information, the medical institution or the fitness operator can understand the calorie intake or nutrient intake of the consumer and use the resultant information for consumer healthcare and dietary management.

The communication apparatus 400 may be a communication terminal or a server of a local government or a public agency (government office). For example, in a case that food poisoning or foreign matter contamination incident in a food occurs, the local government or the public agency can easily find out the source of the food poisoning or the like based on the causal product information or related consumer information.

### Configuration Example of Resource Recovery Apparatus

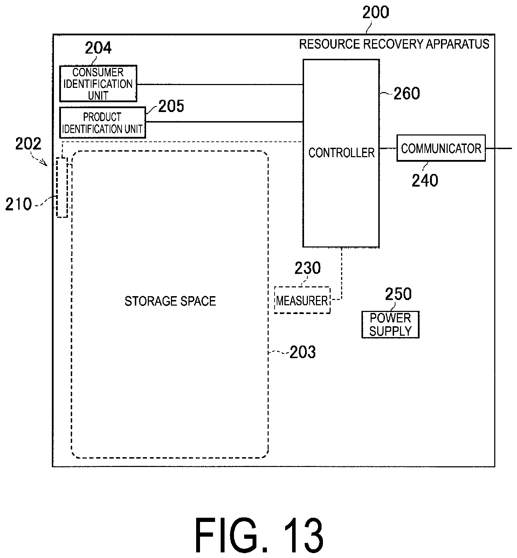

A configuration example of the resource recovery apparatus 200 will be described. FIG. 13 is a diagram illustrating a configuration example of the resource recovery apparatus 200. In FIG. 13, dashed lines illustrate steps that are optional.

As illustrated in FIG. 13, in addition to the consumer identification unit 204 and the product identification unit 205 described above, the resource recovery apparatus 200 includes the opening 202, the storage space 203, the opener/closer 210, the measurer 230, the communicator 240, the power supply 250, and the controller 260.

Under the control of the controller 260, the consumer identification unit 204 identifies a consumer that discards waste (i.e., performs personal authentication) and outputs the consumer identifier to the controller 260.

Under the control of the controller 260, the product identification unit 205 uses the tag reader to read the information (including the product identifier) from the electronic tag 52 attached to the waste and outputs the read information to the controller 260. Information written by the tag reader/writer 102 of terminal apparatus 100 in the store may be stored in the electronic tag 52. The information written by the tag reader/writer 102 may include at least one selected from the group consisting of the consumer identifier for identifying the consumer, the sale location information indicating the sale location (store) of the product 50, and the sale time information indicating the sale time of the product 50.

The product identification unit 205 may not perform a reading operation when the opening 202 is in a closed state and may perform the reading operation when the opening 202 is in an open state. The reading operation includes an operation of transmitting radio waves from the tag reader. By not performing the reading operation when the opening 202 is in the closed state, the power consumption of the resource recovery apparatus 200 can be suppressed.

The product identification unit 205 may periodically perform the operation of reading product identifiers collectively from the electronic tags 52 of the pieces of waste accumulated in the storage space 203. In a case that the number of product identifiers at the time of current read increases compared to the time of previous read, the controller 260 may consider that the increase in the number of read product identifiers corresponds to the product identifiers of newly discarded waste.

The opening 202 is an opening provided between a front surface or a side surface of the resource recovery apparatus 200 and the storage space 203. The waste is thrown into the storage space 203 via the opening 202.

The storage space 203 is a space for storing waste. The storage space 203 may be provided with a replaceable container or a garbage bag.

The opener/closer 210 is provided at the opening 202 and opens and closes the opening 202 under the control of the controller 260. The opener/closer 210 includes a lid (shutter) that covers the opening 202, and an actuator that opens and closes the lid. In the opener/closer 210, the state in which the lid is open is referred to as an open state, and the state in which the lid is closed is referred to as a closed state.

Under the control of the controller 260, the measurer 230 measures the amount of waste in the storage space 203 or the free space in the storage space 203 and outputs, to the controller 260, information indicating the measurement result. The measurer 230 includes a weight sensor that measures the weight of the waste accumulated in the storage space 203. The measurer 230 may include a sensor (e.g., ultrasonic sensor) that measures the height of the waste accumulated in the storage space 203 and/or a counter that counts the number of times that waste is thrown into the storage space 203 (the number of switching between the open state and the closed state in the opener/closer 210). In a case that the weight at the time of current weight measurement (weight measurement when new waste is thrown in) increases compared to the time of previous weight measurement, the controller 260 may consider that the increase in the weight corresponds to the weight of the newly discarded waste.

The communicator 240 includes a communication interface connected to the network 10 in a wired or wireless manner. The communicator 240 communicates with the server apparatus 300 via the network 10.

The power supply 250 supplies driving power to each unit of the resource recovery apparatus 200. For example, the power supply 250 supplies driving power used for the reading operation performed by the product identification unit 205, and driving power used for the opening/closing operation of the actuator of the opener/closer 210. The power supply 250 may include a battery (primary battery or secondary battery) or may include a power converter that converts electrical power from the commercial power grid. The power supply 250 may include a power generating portion such as a photovoltaic cell. In a case that the power supply 250 includes the power generating portion, battery change or power feeding from the outside to the resource recovery apparatus 200 can be suppressed.

The controller 260 controls the power supply 250 such that the electrical power output by the power generating portion (e.g., photovoltaic cell) included in the power supply 250 is used as the driving power described above. For example, the controller 260 controls the photovoltaic cell to directly utilize the generated power of the photovoltaic cell when the weather is fine. When driving is not required, the controller 260 may charge a secondary battery or the like with the generated power. The controller 260 may charge the secondary battery with electrical power from the power grid or directly utilize the electrical power from the power grid for driving when the weather is rainy or cloudy, or the photovoltaic cell is shadowed (when the photovoltaic cell generates no power). Here, the controller 260 may determine the weather based on the output power from the photovoltaic cell or based on weather information acquired from an external server via the communicator 240. The weather information is information indicating the current weather and/or the future weather of a region including the installation position of the resource recovery apparatus 200.

The controller 260 controls each unit of the resource recovery apparatus 200. The controller 260 includes at least one processor and at least one memory electrically connected to the processor.

In a case that the consumer identified by using the consumer identification unit 204 is a legitimate consumer (e.g., a consumer registered in advance in the server apparatus 300), the controller 260 may switch the opener/closer 210 from the closed state to the open state. On the other hand, in a case that the consumer identified by using the consumer identification unit 204 is not a legitimate consumer, the controller 260 may maintain the opener/closer 210 in a closed state. This enables only consumer with legitimate authority to utilize the resource recovery apparatus 200, allowing illegal discarding such as discarding of the hazardous materials to be suppressed.

Here, the controller 260 may send, to the server apparatus 300, a query or a request about an identified consumer to determine whether the consumer is legitimate. Alternatively, the server apparatus 300 may determine whether the consumer is legitimate and notify the resource recovery apparatus 200 of the result of the determination, and the controller 260 may control the opening and closing accordingly.

After switching the opener/closer 210 from the closed state to the open state, the controller 260 may switch the opener/closer 210 from the open state to the closed state when a closing condition is satisfied. The closing condition includes at least one selected from the group consisting of 1) condition that a certain time has elapsed since switching to the open state, 2) condition that the product identification unit 205 has newly read information from the electronic tag 52 of the waste, 3) condition that a certain time has elapsed since the product identification unit 205 has newly read the information from the electronic tag 52 of the waste, and 4) condition that the consumer identification unit 204 has performed the second authentication on the same consumer. The closing condition in 4) assumes that, for example, the consumer passes the IC card over the consumer identification unit 204 to switch the opener/closer 210 to the open state and then, after discarding of the waste, passes the IC card over the consumer identification unit 204 to switch the opener/closer 210 to the closed state.

The controller 260 acquires the consumer identifier output by the consumer identification unit 204 and the product identifier output by the product identification unit 205, generates a discarding notification message including the product identifier acquired and the product identifier acquired, and transmits the discarding notification message to the server apparatus 300 via the communicator 240.

The controller 260 may further include, in the discarding notification message, the weight measurement information indicating the weight of the individual waste (i.e., the weight at the time of discarding of product 50). The controller 260 may include the clocking function and may generate discarding time information (time stamp) indicating the discarding time for the waste and associate the discarding time information with the product identifier.

The controller 260 may transmit the discarding notification message to the server apparatus 300 every time waste is newly discarded. The controller 260 may accumulate (buffer), over a predetermined time, information to be included in the discarding notification message and transmit, to the server apparatus 300, the discarding notification message including the accumulated information. For example, the condition for transmitting the discarding notification message may be that a transmission opportunity has arrived according to the periodic transmission period or that the buffer accumulation amount exceeds a threshold value. In a case that the transmission of the discarding notification message is suspended until the transmission condition is satisfied, the data communication amount and the power consumption of the resource recovery apparatus 200 can be suppressed.

When transmitting the discarding notification message to the server apparatus 300, the controller 260 may include, in the discarding notification message, the discarding location information indicating the installation location (i.e., discarding location) of the resource recovery apparatus 200. The discarding location information is position information indicating the installation location of the resource recovery apparatus 200, or facility information indicating the name of the facility (e.g., a store) corresponding to the installation location of the resource recovery apparatus 200. The discarding location information may be stored in advance by the controller 260. In a case that the resource recovery apparatus 200 includes a GNSS receiver, GNSS position information may be used as the discarding location information.

In a case that the installation location of the resource recovery apparatus 200 is fixed, the server apparatus 300 may store the discarding location information, in advance, in association with the identifier of the resource recovery apparatus 200. In this case, when transmitting the discarding notification message to the server apparatus 300, the controller 260 includes the identifier of the resource recovery apparatus 200 in the discarding notification message. The server apparatus 300 can identify the discarding location information based on the identifier of the resource recovery apparatus 200. Note that the identifier of the resource recovery apparatus 200 may be always included in the discarding notification message.

### Configuration Example of Server Apparatus

A configuration example of the server apparatus 300 according to an embodiment will be described. Figures illustrating a configuration example of the server apparatus 300 according to the third embodiment are the same as and/or similar to the figures illustrating the configuration example of the server apparatus 300 according to the first embodiment. Thus, the configuration example of the server apparatus 300 according to the third embodiment will be described below with reference to FIG. 3. Differences from the configuration example of the server apparatus 300 according to the first embodiment will be mainly described, and the description of similar or identical configurations will be omitted.

In the third embodiment, the communicator 310 receives the discarding notification message from the resource recovery apparatus 200. The communicator 310 may receive the sale notification message from the terminal apparatus 100.

In the third embodiment, the storage 320 stores the product information related to the product 50 and the consumption history information described above. The processing unit 330 manages the product information and the consumption history information stored in the storage 320.

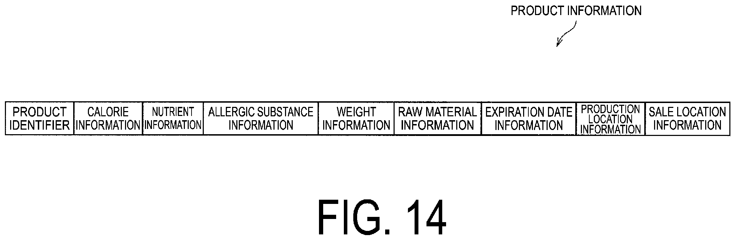

FIG. 14 is a diagram illustrating an example of the product information stored by the storage 320. The processing unit 330 may acquire the product information from the business operator manufacturing or selling the product 50 and manage the product information acquired. In a case that the product information is written to the electronic tag 52, in response to the communicator 310 receiving, from the resource recovery apparatus 200, the discarding notification message including the product information, the processing unit 330 may acquire the product information included in the discarding notification message and manage the product information acquired.

As illustrated in FIG. 14, the product information includes, for each of the articles 50, at least one selected from the group consisting of the product identifier, calorie information, nutrient information, allergic substance information, weight information, raw material information, expiration date information, production location information, and the sale location information.

The product identifier is an identifier for identifying the product 50.

The calorie information is information indicating the calories of the product 50.

The nutrient information is information indicating the nutrients included in the product 50 and the amounts of the nutrients.

The allergic substance information is information indicating an allergic substance included in the product 50.

The weight information is information indicating at least one selected from the group consisting of the total weight of the product 50, the weight of the container and packaging 51 of the product 50 (container and packaging weight), and the amount of contents of the product 50 (weight of the product 50 excluding the weight of the container and packaging).

The raw material information is information indicating raw materials of the product 50. The expiration date information is information indicating an expiration date (best-by date) of the product 50.

The production location information is information indicating the production location of the product 50 (production region or factory). The production location information may include a lot number corresponding to the produced product 50 in a factory that produces (manufacturing) the product 50.

The sale location information is information indicating the sale location (store) of the product 50. The sale location information may be written to the electronic tag 52 by the tag reader/writer 102 of the terminal apparatus 100 in the store. The sale location information may include information of a business operator (company) operating a store such as a franchise store or a chain store.

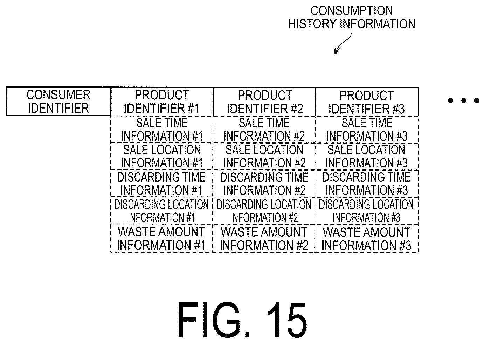

FIG. 15 is a diagram illustrating an example of consumption history information stored by the storage 320. When the communicator 310 receives, from the resource recovery apparatus 200, the discarding notification message including the consumer identifier and the product identifier, the processing unit 330 acquires the consumer identifier and the product identifier included in the discarding notification message and updates the consumption history information by using the consumer identifier acquired and product identifier acquired. When the communicator 310 receives the sale notification message from the terminal apparatus 100, the processing unit 330 may acquire the information included in the sale notification message and update the consumption history information by using the information acquired.

As illustrated in FIG. 15, the consumption history information includes, for each consumer, the consumer identifier of the consumer and/or the product identifier (product identifier #1, #2, #3, and the like) of each product 50 consumed by the consumer.

Each product identifier may be associated with at least one selected from the group consisting of the sale time information, the sale location information, the discarding time information, the discarding location information, and the waste amount information.

The sale time information is information indicating the sale time of the corresponding product 50. The sale time information may be information written to the electronic tag 52 by the tag reader/writer 102 of the terminal apparatus 100 in the store or may be information included in the sale notification message received from the terminal apparatus 100. The sale time information may include information of a business operator (company) operating a store such as a franchise store or a chain store.

The sale location information is information indicating the sale location (e.g., the name or position of a store) of the corresponding product 50. The sale location information may be information written to the electronic tag 52 by the tag reader/writer 102 of the terminal apparatus 100 in the store or may be information included in the sale notification message received from the terminal apparatus 100. The sale location information may include information of a business operator (company) operating a store such as a franchise store or a chain store.

The discarding time information is information indicating the discarding time of the corresponding product 50. The discarding time information may be information included in the discarding notification message received from the resource recovery apparatus 200 or may be information obtained by the processing unit 330 estimating the discarding time based on the reception time of the discarding notification message.

The discarding location information is information indicating the discarding location of the corresponding product 50. The discarding location information may be information included in the discarding notification message received from the resource recovery apparatus 200 or may be information obtained by the processing unit 330 identifying the discarding location based on a source identifier of the discarding notification message (i.e., the identifier of the resource recovery apparatus 200).

The waste amount information is information indicating the amount of waste of the corresponding product 50. The amount of waste is the weight obtained by subtracting the weight of the container and packaging of the product 50 from the weight of the discarded product 50. For example, the processing unit 330 calculates the amount of waste based on the weight information included in the product information and the weight measurement information included in the discarding notification message and manages, in association with the product identifier, the waste amount information indicating the calculated amount of waste.

The processing unit 330 executes various types of information processing based on information received by the communicator 310 and information stored in the storage 320. The processing unit 330 includes at least one processor and at least one memory electrically connected to the processor.

The processing unit 330 manages the product information illustrated in FIG. 14 and the consumption history information illustrated in FIG. 15 based on the information received by the communicator 310. Specifically, the processing unit 330 manages the consumption history information (see FIG. 15) indicating the history of the product 50 consumed by the consumer based on the consumer identifier and the product identifier received by the communicator 310 from the resource recovery apparatus 200. The processing unit 330 transmits the consumption history information managed by the processing unit 330 to the communication apparatus 400 via the communicator 310.

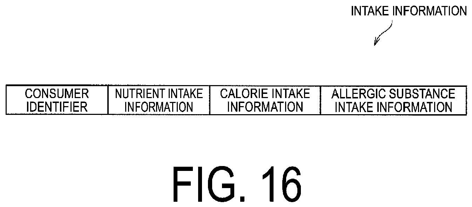

The processing unit 330 manages the intake information indicating at least one selected from the group consisting of the nutrients, the calories, and the allergic substances taken in by the consumer based on the product information and the consumption history information. The processing unit 330 transmits the intake information managed by the processing unit 330 to the communication apparatus 400 via the communicator 310. FIG. 16 is a diagram illustrating an example of the intake information stored by the storage 320.

As illustrated in FIG. 16, the intake information includes, for each consumer, at least one selected from the group consisting of the consumer identifier of the consumer, nutrient intake information, calorie intake information, and allergic substance intake information.

The nutrient intake information is information indicating the nutrients taken in by the consumer and the amounts of the nutrients. The processing unit 330 acquires, from the product information, the nutrient information corresponding to the product identifier included in the discarding notification message and uses the nutrient information acquired to update the nutrient intake information corresponding to the consumer identifier included in the discarding notification message. The nutrient intake information may include nutrients taken in by the consumer within a predetermined period of time (e.g., one day, one week, one month, or the like) and statistical values of amounts of the nutrients. For example, as the nutrients taken in by the consumer and the amounts of the nutrients during a certain day, the processing unit 330 manages, as the nutrient intake information, information including a total of a [g] of vitamin C, a total of b [g] of vitamin D, a total of c [g] of iron, and a total of d [g] of calcium.

The calorie intake information is information indicating the calories taken in by the consumer. The processing unit 330 acquires, from the product information, the calorie information corresponding to the product identifier included in the discarding notification message and uses the calorie information acquired to update the calorie intake information corresponding to the consumer identifier included in the discarding notification message. The calorie intake information may include statistical values of the calories taken in by the consumer during a predetermined period of time (e.g., one day, one week, one month, or the like). For example, the processing unit 330 manages, as the calorie intake information, information indicating that the average value of the calories taken in by the consumer per day during a certain month is A [kcal].

The allergic substance intake information is information indicating allergic substances and the amounts of the allergic substances taken in by the consumer. The processing unit 330 acquires, from the product information, the allergic substance information corresponding to the product identifier included in the discarding notification message and uses the allergic substance information acquired to update the allergic substance intake information corresponding to the consumer identifier included in the discarding notification message. The allergic substance intake information may include allergic substances and the statistical values of the amounts of the allergic substances taken in by the consumer during a predetermined period of time (e.g., one day, one week, one month, or the like). For example, as the allergic substances taken in by the consumer and the amounts of the allergic substances during a certain day, the processing unit 330 manages, as the allergic substance intake information, information including a total of x [g] of egg, a total of y [g] of milk, and a total of z [g] of wheat.

As described above, based on the weight measurement information included in the discarding notification message, the processing unit 330 manages, for each product 50, the waste amount information (see FIG. 15) indicating the amount of food or beverage left over by the consumer. The processing unit 330 transmits the waste amount information managed by the processing unit 330 to the communication apparatus 400 via the communicator 310.

The processing unit 330 may modify the intake information based on the waste amount information. For example, based on the waste amount information and the product information, the processing unit 330 determines the nutrients and the amounts of the nutrients corresponding to the amount of waste, the calories corresponding to the amount of waste, and the allergic substances and the amounts of the allergic substances corresponding to the amount of waste. Then, the processing unit 330 modifies the intake information by subtracting these determination results from the intake information. This allows the information regarding the nutrients, the calories, and the allergic substances taken in by consumers to be more accurately managed.

When the communicator 310 receives, from the communication apparatus 400, the information indicating that two or more consumers have suffered health damage (for example, food poisoning), the processing unit 330 acquires, from the storage 320, the consumption history information corresponding to the consumer identifier of each of the two or more consumers. Based on the consumption history information regarding each of the two or more consumers, the processing unit 330 may estimate, as the cause of the health damage, the product (product name) taken in by the two or more consumers in common. The processing unit 330 may estimate the product 50 that is the cause of the health damage taking into account the sale location information and/or the production location information included in the product information. For example, the processing unit 330 may estimate, as the cause of the health damage, the product 50 purchased at the same sale location by the two or more consumers. The processing unit 330 transmits, to the communication apparatus 400 via the communicator 310, the causal product information indicating the determination result (estimation result) of the product 50 that caused the health damage.

When the communicator 310 receives, from the communication apparatus 400, information indicating a problem (for example, foreign matter contamination) is discovered in a particular product, based on the consumption history information managed by the processing unit 330, the processing unit 330 determines whether the consumer has consumed (taken in) a related product that is of the same type as the type of the particular product (that has the same product name as the product name of the particular product) and that is related to the particular product. For example, when foreign matter contamination is discovered in a product with the product name "abc", the processing unit 330 identifies consumers who have taken in the product with the product name "abc" based on the consumption history information of a plurality of consumers managed by the processing unit 330 and the product information managed by the processing unit 330. Based on the production location information included in the product information, the processing unit 330 may identify consumers who have taken in products having the product name "abc" and produced in the same lot (related products). The processing unit 330 transmits, to the communication apparatus 400 via the communicator 310, the related consumer information indicating the identified consumers.

### Operation Example of Resource Recovery System

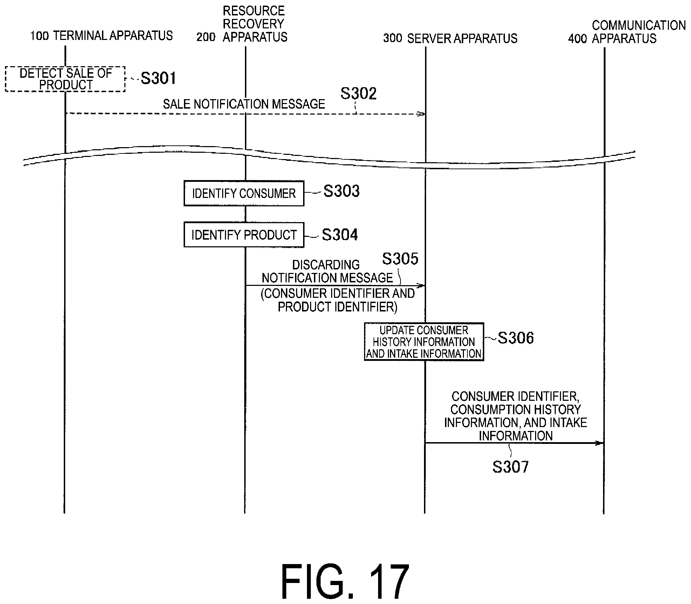

An operation example of the resource recovery system 1 will be described. FIG. 17 is a diagram illustrating an operation example of the resource recovery system 1. In FIG. 17, dashed lines illustrate steps that are optional.

As illustrated in FIG. 17, in step S301, the terminal apparatus 100 detects sale of the product 50 to the consumer.

In step S302, the terminal apparatus 100 transmits, to the server apparatus 300, the sale notification message including the information related to the product 50 sold to the consumer. The sale notification message may include a part of information configuring the above-described product information (e.g., sale location information) and a part of information configuring the above-described consumption history information (e.g., sale time information or sale location information). The terminal apparatus 100 may use the tag reader/writer 102 to write these pieces of information to the electronic tag 52.

Subsequently, in step S303, the resource recovery apparatus 200 identifies the consumer attempting to discard the container and packaging 51 of the product 50. In a case of successfully identifying the consumer, the resource recovery apparatus 200 accepts discarding (input) of the waste.

In step S304, the resource recovery apparatus 200 reads information from the electronic tag 52 attached to the waste. The information read from the electronic tag 52 includes the product identifier. The information read from the electronic tag 52 may include at least a part of information configuring the above-described product information.

In step S305, the resource recovery apparatus 200 transmits, to the server apparatus 300, the discarding notification message including the consumer identifier of the consumer identified in step S303 and the information (including the product identifier) read in step S304. The discarding notification message may include at least one selected from the group consisting of the discarding time information, the discarding location information, and the weight measurement information.

In step S306, the server apparatus 300 updates the consumption history information and the intake information based on the discarding notification message from resource recovery apparatus 200. Specifically, the server apparatus 300 acquires the consumer identifier and the product identifier included in the discarding notification message and updates the consumption history information by using the consumer identifier acquired and the product identifier acquired. The server apparatus 300 manages the sale time information, the sale location information, the discarding time information, the discarding location information, and the waste amount information in association with the product identifier. Based on the product information and the consumption history information, the server apparatus 300 manages the intake information indicating at least one selected from the group consisting of the nutrients, the calories, and the allergic substances taken in by the consumer. The server apparatus 300 may modify the intake information based on the waste amount information.

In step S307, the server apparatus 300 transmits the consumption history information and intake information managed by the server apparatus 300 to the communication apparatus 400.

As described above, according to the third embodiment, the resource recovery apparatus 200 can inform the server apparatus 300 which consumer has consumed which product, and the server apparatus 300 can understand and manage a history of the consumed product for each consumer. This allows, for example, a high value-added service such as assistance of healthcare for each consumer to be provided.

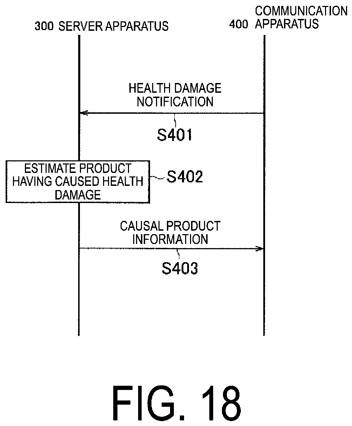

FIG. 18 is a diagram illustrating an operation example of the resource recovery system 1 in a case that the consumer has suffered health damage (e.g., food poisoning).

As illustrated in FIG. 18, in step S401, the server apparatus 300 receives, from the communication apparatus 400, information (health damage notification) indicating that two or more consumers have suffered health damage (e.g., food poisoning). The health damage notification includes the product identifier of each of the two or more consumers.

In step S402, based on the consumption history information corresponding to the consumer identifier of each of the two or more consumers, the server apparatus 300 estimates, as the cause of the health damage, a product (product name) taken in by the two or more consumers in common. The server apparatus 300 may estimate a product 50 that caused the health damage taking into account the sale location information and/or the production location information included in the product information.

In step S403, the server apparatus 300 transmits, to the communication apparatus 400, the causal product information indicating the determination result (estimation result) of the product 50 that caused the health damage.

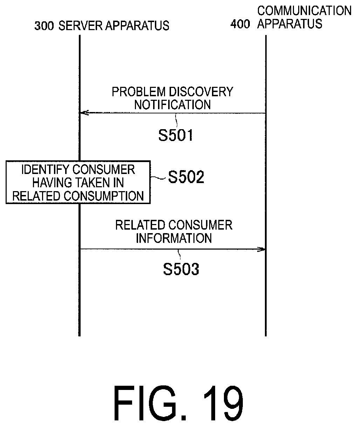

FIG. 19 is a diagram illustrating an operation example of the resource recovery system 1 in a case that a problem (e.g., foreign matter contamination) is discovered in a particular product.

As illustrated in FIG. 19, in step S501, the server apparatus 300 receives, from the communication apparatus 400, information (problem discovery notification) indicating that a problem (e.g., a foreign matter contamination) is discovered in a particular product. The problem discovery notification includes the product identifier of the particular product.

In step S502, based on the consumption history information managed by the server apparatus 300, the server apparatus 300 identifies consumers who have consumed (taken in) a related product that is of the same type as the type of the particular product (that has the same product name as the product name of the particular product) and that is related to the particular product.

In step S503, the server apparatus 300 transmits, to the communication apparatus 400, the related consumer information indicating the identified consumer.

### Other Embodiments

A program may be provided to cause a computer to execute the processing operations according to the first to the third embodiments described above. The program may be recorded in a computer readable medium. Use of the computer readable medium enables the program to be installed on a computer. Here, the computer readable medium on which the program is recorded may be a non-transitory recording medium. The non-transitory recording medium is not particularly limited, but may be, for example, a recording medium such as a CD-ROM, a DVD-ROM, or the like.

The first to third embodiments have been described above in detail with reference to the drawings; however, specific configurations are not limited to those described above, and various design modifications and the like can be made without departing from the gist of the embodiments.

Note that the United Nations Summit of September 2015 adopted "Sustainable Development Goals (SDGs)" as 17 international goals. The resource recovery system, the server apparatus, the resource recovery apparatus, and the method according to the first to third embodiments can contribute the achievement of the goals of, among the 17 goals of the SDGs, "7. Affordable and clean energy", "9. Industry, innovation and infrastructure", "11. Sustainable cities and communities" and " 12. Responsible consumption and production", for example.

The present application claims priority to Japanese Patent Application No. 2020-048401 (filed on March 18, 2020) and Japanese Patent Application No. 2020-048419 (filed on March 18, 2020), and the entire contents of which are incorporated herein by reference.

## Claims

1. A resource recovery system for recovering articles which can be recycled as resources, the resource recovery system comprising:
a resource recovery apparatus configured to recover an article discarded by a consumer; and
a server apparatus configured to communicate with the resource recovery apparatus, wherein
the server apparatus is configured to associate a discarding time with a provision time, based on a first message received from the resource recovery apparatus, the discarding time the article is discarded, the provision time the article is provided to the consumer, the first message including an article identifier to identify the article.

2. The resource recovery system according to claim 1, wherein
the server apparatus is configured to manage a period information related to a period that elapses from the provision time to the discarding time for the article.

3. The resource recovery system according to claim 2, wherein
the article is configured to include a container and packaging of a product,
the server apparatus is configured to determine a sale time is the provision time, the sale time the product is sold, and
the server apparatus is configured to calculate the period from the sale time of the product to the discarding time of the container and packaging, by using a sale time when the product is sold as the provision time.

4. The resource recovery system according to claim 2 or 3, wherein
the server apparatus is configured to transmit the period information to a communication apparatus of a business operator providing the article.

5. The resource recovery system according to any one of claims 1 to 4, wherein
the first message further includes discarding time information indicating the discarding time, and
the server apparatus is configured to identify the discarding time based on the discarding time information included in the first message.

6. The resource recovery system according to any one of claims 1 to 4, wherein
the resource recovery apparatus is configured to transmit the first message to the server apparatus when the article is discarded, and
the server apparatus is configured to identify, as the discarding time, a reception time the first message is received from the resource recovery apparatus.

7. The resource recovery system according to any one of claims 1 to 6, wherein
the server apparatus is configured to
receive a second message including the article identifier from a terminal apparatus, the terminal apparatus installed at a provision location where the article is provided to the consumer, and
identify the provision time based on the second message.

8. The resource recovery system according to claim 7, wherein
the second message is further configured to include provision time information indicating the provision time, and
the server apparatus is configured to identify the provision time based on the provision time information included in the second message.

9. The resource recovery system according to claim 7, wherein
the terminal apparatus is configured to transmit the second message to the server apparatus when a business operator providing the article provides the article, and
the server apparatus is configured to identify, as the provision time, a reception time the second message is received from the terminal apparatus.

10. The resource recovery system according to any one of claims 1 to 6, further comprising
a writing apparatus configured to write provision time information to an electronic tag attached to the article, the provision time information indicating the provision time, wherein
the resource recovery apparatus is configured to
read the article identifier and the provision time information from the electronic tag, and
transmit the first message including the article identifier and the provision time information to the server apparatus, and
the server apparatus is configured to identify the provision time based on the provision time information included in the first message.

11. The resource recovery system according to claim 10, wherein
the writing apparatus is further configured to write provision location information to the electronic tag, the provision location information indicating a provision location where the article is provided to the consumer,
the resource recovery apparatus is further configured to
read the provision location information from the electronic tag and
transmit the first message to the server apparatus, the first message further including the provision location information, and
the server apparatus is configured to identify the provision location based on the provision location information included in the first message.

12. The resource recovery system according to any one of claim 2 or claims 3 to 11 depending on claim 2, wherein
the server apparatus is configured to
acquire a consumer identifier, the consumer identifier configured to identify the consumer corresponding to the article, and
associate the period information with the consumer identifier.

13. The resource recovery system according to claim 12, wherein
the server apparatus is configured to acquire the consumer identifier from a terminal apparatus, the terminal apparatus installed at a provision location where the article is provided to the consumer.

14. The resource recovery system according to claim 12, wherein
the first message includes the consumer identifier, and
the server apparatus is configured to acquire the consumer identifier included in the first message.

15. The resource recovery system according to claim 14, further comprising
a writing apparatus configured to write the consumer identifier to an electronic tag attached to the article, wherein
the resource recovery apparatus is configured to
read the consumer identifier from the electronic tag, and
transmit the first message to the server apparatus, the first message including the consumer identifier.

16. The resource recovery system according to claim 14, wherein
the resource recovery apparatus is configured to
recognize the consumer by personal authentication, and
transmits the first message to the server apparatus, the first message including the consumer identifier of the recognized consumer.

17. A server apparatus in a resource recovery system for recovering articles which can be recycled as resources, wherein
the server apparatus is configured to communicate with a resource recovery apparatus, the resource recovery apparatus configured to recover an article discarded by a consumer, and
the server apparatus includes:
a communicator configured to receive a first message from the resource recovery apparatus, the first message including an article identifier configured to identify the discarded article; and
a processing unit configured to associate a discarding time with a provision time based on the first message, the discarding time the article is discarded, the provision time the article is provided to the consumer.

18. A method executed by a resource recovery system for recovering articles which can be recycled as resources, the method comprising:
communicating with a resource recovery apparatus configured to recover an article discarded by a consumer;
receiving a first message from the resource recovery apparatus, the first message including an article identifier configured to identify the discarded article; and
associating a discarding time with a provision time based on the first message, the discarding time the article is discarded, the provision time the article is provided to the consumer.
